Europäisches Patentamt

(19) European Patent Office

Office européen des brevets

(11) Numéro de publication: **0 097 922**
**B1**

(12) **FASCICULE DE BREVET EUROPÉEN**

(45) Date de publication du fascicule du brevet:
**05.11.86**

(21) Numéro de dépôt: **83106154.4**

(22) Date de dépôt: **23.06.83**

(51) Int. Cl.⁴: **F 16 B 39/20**

(54) Dispositif pour immobiliser une vis ou un écrou à une position déterminée.

(30) Priorité: **29.06.82 FR 8211382**

(43) Date de publication de la demande:
**11.01.84 Bulletin 84/2**

(45) Mention de la délivrance du brevet:
**05.11.86 Bulletin 86/45**

(84) Etats contractants désignés:
**AT BE CH DE FR GB IT LI LU NL SE**

(56) Documents cité:
**DE-C-408 643**
**GB-A-618 117**

(73) Titulaire: **COMPAGNIE PARISIENNE D'OUTILLAGE A AIR COMPRIME Société anonyme dite:, Zone Industrielle des Fourmis B.P. 37, F-74130 Bonneville (FR)**

(72) Inventeur: **Canu, Gérard, Le Pré de la Grange, F - 74130 Bonneville (FR)**

(74) Mandataire: **Weinmiller, Jürgen, Lennéstrasse 9, D-8133 Feldafing (DE)**

EP 0 097 922 B1

LIBER, STOCKHOLM 1986

## Description

L'invention concerne un dispositif pour immobiliser une vis ou un écrou dans ou sur un filetage comportant un élément de ressort spirale ayant au moins trois quarts d'une spire coopérant avec une extrémité de l'écrou.

Un tel dispositif est connu du brevet GB-A-618117. Mais le dispositif ne permet pas d'éviter tout risque de dévissage de la vis ou de l'écrou en particulier lorsqu'il s'agit d'une vis ou d'un écrou de blocage d'un pointeau qui ordinairement est soumis à une pression qui s'exerce dans le sens tendant à chasser la vis ou l'écrou vers l'extérieur.

Le dispositif selon l'invention permettant de bloquer la vis ou l'écrou est caractérisé en ce que la vis ou l'écrou est muni(e) d'un épaulement cylindrique servant de logement à au moins une partie de l'élément de ressort spirale.

L'invention sera bien comprise par la description donnée ci-après du dispositif de l'invention, en référence au dessin annexé dans lequel:

- la figure 1 représente en coupe, un trou taraudé avec vis et dispositif d'immobilisation selon l'invention.

- la figure 2 est un schéma en perspective du dispositif d'immobilisation.

- la figure 3 est une vue en coupe du détail A de la figure 1.

- la figure 4 est une vue en coupe d'une tige filetée avec écrou immobilisé avec le dispositif de l'invention.

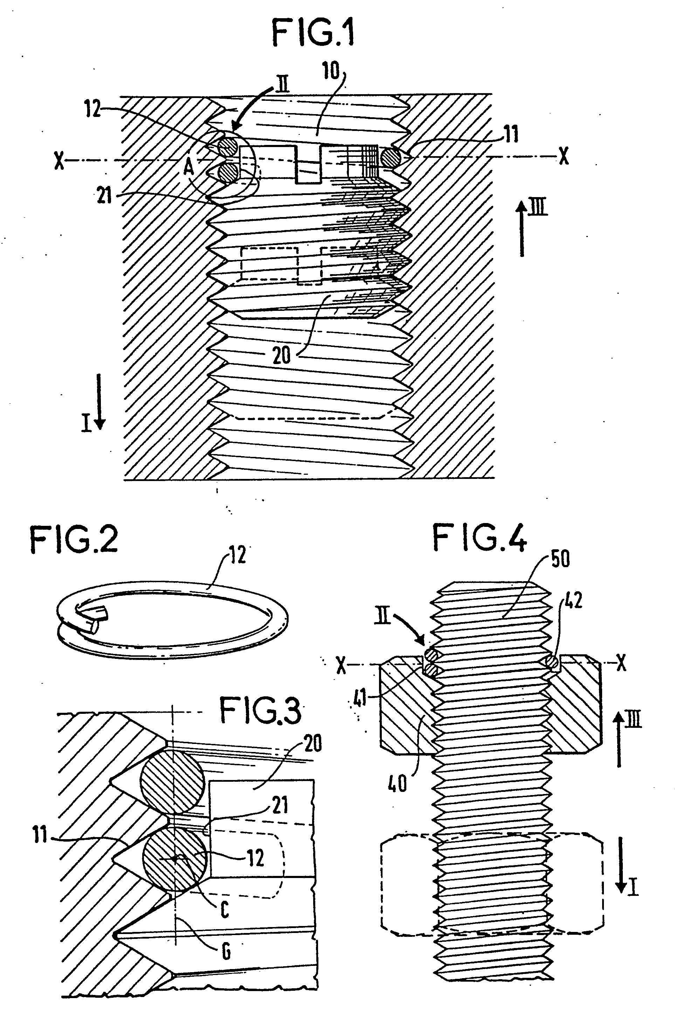

La figure 1 illustre le dispositif selon l'invention appliqué à un alésage 10, taraudé et recevant une vis 20.

La ligne XX correspond à la limite au-delà de laquelle le sommet de la vis doit être immobilisé. Cette ligne correspond à un filet donné 11 du filetage de l'alésage.

Le montage du dispositif selon l'invention est le suivant:

- dans une première phase I, on visse la vis au-delà de la limite à laquelle on veut l'immobiliser.

- dans une seconde phase II, on place dans le filet 11 situe au droit de ladite limite, un élément élastique 12, constitué par un élément de ressort spirale comprenant au moins trois-quarts de spire, mais préférentiellement 1,5 spires.

- dans une troisième phase, on déplace la vis de manière à amener une de ses extrémités au droit dudit élément, ladite extrémité possédant un épaulement cylindrique assurant une immobilisation de l'élément (11), interdisant ainsi tout déplacement de la vis en-deçà de la limite.

Dans le cas de la figure 1 l'épaulement a un diamètre sensiblement égal au diamètre intérieur de l'élément de ressort.

L'épaulement 21 coince l'élément 12 de ressort et le maintient au fond du filet 11, l'élément 12 de ressort empêche tout mouvement de la vis 20 en deçà de la limite X-X fixée.

L'élément 12 de ressort est représenté dans la figure 2 et comprend une spire et demie; le matériau qui le constitue est de l'acier à ressort, à section circulaire.

Le diamètre de cette section est avantageusement choisi de telle manière que lorsque l'élément est dans son filet, le centre C de la section soit sensiblement situé sur la génératrice G externe du filetage (voir figure 3).

La figure 4 illustre le dispositif selon l'invention appliqué à un écrou 40 sur une tige filetée 50. Les phases I, II et III sont identiques à celles décrites précédemment.

L'épaulement 41 de l'écrou 40 est pratiqué à l'intérieur de celui-ci.

Le dispositif selon l'invention est de mise en oeuvre très simple et peu onéreuse. Un simple tournage de l'écrou ou de la vis permet de réaliser l'épaulement. Les vis ou les écrous peuvent être démontés en effectuant les diverses phases du procédé dans l'ordre inverse. Aucune détérioration de pièces n'est susceptible d'intervenir par les mises en oeuvre successives du procédé.

L'invention s'applique notamment à la fixation de pointeaux de vérins.

## Revendications

1/ Dispositif pour immobiliser une vis ou un écrou (20, 40) dans ou sur un filetage comportant un élément de ressort spirale (12, 42) ayant au moins trois quarts d'une spire coopérant avec une extrémité de la vis ou de l'écrou (20, 40), caractérisé en ce que la vis ou l'écrou (20, 40) est muni d'un épaulement cylindrique (21, 41) servant de logement à au moins une partie de l'élément de ressort spirale (12, 42).

2/ Dispositif selon la revendication 1, caractérisé en ce que la section dudit élément (12, 42) est circulaire de diamètre tel que placé dans le filet son centre (C) soit sensiblement sur la génératrice (G) extérieure au filetage.

## Patentansprüche

1. Vorrichtung zum Blockieren einer Schraube oder einer Mutter (20, 40) in oder auf einem Gewinde, mit einem Spiralfederelement (12, 42), das mindestens eine Dreiviertel-Windung besitzt und mit einem Ende der Schraube oder der Mutter (20, 40) zusammenwirkt, dadurch gekennzeichnet, daß die Schraube oder die Mutter eine zylindrische Schulter (21, 41) aufweist, dieals Sitz für mindestens einen Teil des Spiralfederelements (12, 42) dient.

2. Vorrichtung nach Anspruch 1, dadurch gekennzeichnet, daß der Querschnitt dieses Elements (12, 42) kreisförmig und von einem solchen Durchmesser ist, daß sein Zentrum (C) im wesentlichen auf der äußeren Mantellinie (G) des Gewindes liegt, wenn es in den Gewindegang eingesetzt ist.

**Claims**

1. A device for immobilizing a screw or a nut (20, 40) in or on a thread, comprising a spiral spring element (12, 42) having at least three fourth of a winding cooperating with an end of the screw or the nut (20, 40), characterized in that the screw or the nut (20, 40) is supplied with a cylindrical shoulder (21, 41) serving as a housing for at least part of the spiral spring element (12, 42).

2. A device according to claim 1, characterized in that the cross-section of said element (12, 42) is circular and of such a diameter that its center (C) lies essentially on the outer generatrix (G) of the thread, when it is placed in the thread.

# FIG.1

# FIG.2

# FIG.3

# FIG.4